Europäisches Patentamt

European Patent Office

Office européen des brevets

(11) Numéro de publication: **0 388 303**
**A1**

## (12) DEMANDE DE BREVET EUROPEEN

(21) Numéro de dépôt: **90400695.4**

(22) Date de dépôt: **15.03.90**

(51) Int. Cl.⁵: **G02C 1/06**

(30) Priorité: **16.03.89 FR 8903450**

(43) Date de publication de la demande:
**19.09.90 Bulletin 90/38**

(84) Etats contractants désignés:
**AT BE DE DK ES GB GR IT NL SE**

(71) Demandeur: **Toffin, François**
**20, rue de Savoie**
**F-75006 Paris(FR)**

Demandeur: **Varnier, Andrée**
**46, rue des Envierges**
**F-75020 Paris(FR)**

(72) Inventeur: **Toffin, François**
**20, rue de Savoie**
**F-75006 Paris(FR)**

(74) Mandataire: **Dupuis-Latour, Dominique**
**71, avenue Paul Doumer**
**F-75116 Paris(FR)**

(54) **Paire de lunettes à monture interchangeable.**

(57) Cette paire de lunettes comporte une monture (10) et une paire de verres cerclés (30) réunis ensemble par une tige centrale (36), la monture comportant dans la région du nez (12) un évidement (19) logeant cette tige.

Selon l'invention, la gorge périphérique (14) de la monture présente un épaulement (14b) seulement sur une région (14a) de chaque emplacement de verre, la région située en vis-à-vis (14c) étant essentiellement dépourvue d'un tel épaulement, et la paire de verres cerclés (30,36) est élastiquement déformable en flexion entre:

• une première position, fortement fléchie, obtenue par sollicitation extérieure de l'utilisateur, permettant l'insertion de chacun des verres cerclés sous l'épaulement homologue de la monture sans déformation notable de cette dernière, et

• une seconde position, faiblement ou non fléchie, obtenue après suppression de ladite sollicitation extérieure, permettant l'emboîtement de chacun des verres cerclés sous l'épaulement homologue de la monture et le maintien de ceux-ci en position dans la gorge de la monture.

Avantageusement, dans la seconde position, la paire de verres cerclés reste soumise à une compression en bout du fait de la venue en contact des verres cerclés avec la face interne de la gorge périphérique de la monture, cette compression en bout produisant un effet de flambage venant renforcer le maintien des verres cerclés en position dans la gorge de la monture à l'encontre de sollicitations extérieures non intentionnelles.

FIG.5

## Paire de lunettes à monture interchangeable

La présente addition concerne un perfectionnement à la paire de lunettes à monture interchangeable décrite dans le FR-A-2 629 604 (publié le 6 octobre 1989).

Ce document décrit une paire de lunettes comportant d'une part une monture et d'autre part deux verres cerclés pouvant être mis en place sur la monture et retirés à volonté par l'utilisateur lui-même (comme dans le FR-A-1 566 709).

Il propose en outre de réunir ensemble la paire de verres cerclés par une tige centrale élastique présentant un effet de ressort, de manière que cette paire de verres cerclés forme un ensemble monobloc, facile à manipuler par l'utilisateur sans risque de déformation permanente.

Pour assurer le maintien de la paire de verres cerclés dans la monture, le FR-A-2 629 604 précité proposait que la monture soit légèrement déformable, pour pouvoir venir y emboîter la paire de verres cerclés par encliquetage, de préférence par l'intermédiaire de bossages rapportés sur les cercles et venant coopérer avec des logements homologues respectifs de la monture.

Ce mode de fixation, qui présupposait une possibilité de déformation de la monture afin de pouvoir y loger la paire de verres cerclés, pouvait rendre difficile le choix du matériau de la monture et la détermination des dimensions des gorges et des logements recevant les verres cerclés.

On pouvait se heurter en effet à des impératifs contradictoires : d'une part facilité de montage et de démontage par l'utilisateur sans trop solliciter la monture et la paire de verres cerclés (ce qui risquerait de les tordre ou de les briser) et d'autre part tenue suffisante aux diverses sollicitations extérieures non intentionnelles qui auraient pu provoquer l'expulsion de la paire de verres cerclés hors de leur logement dans la monture.

D'autres techniques de fixation ont été proposées, par exemple par le US-A-2 586 546, où les verres ne sont plus cerclés, mais sont des verres nus, déposés au fond d'un logement de forme homologue réalisé dans la monture et maintenus en place au fond de ce logement par insertion d'une pièce de retenue clipsable sur la monture.

Avec un tel mode de fixation, on perd l'avantage de la simplicité puisqu'il comprend au moins quatre éléments à assembler (la monture + les deux verres nus + la pièce de retenue) au lieu de deux seulement dans le cas du FR-A-2 629 604 (la monture + la paire de verres cerclés monobloc).

De ce fait, la manipulation et le rangement sont compliqués d'autant, l'utilisateur doit toucher les verres (alors qu'avec une paire de verres cerclés il est possible de saisir celle-ci par la tige centrale, sans toucher les verres), etc. En outre il peut éprouver des difficultés à positionner convenablement les verres nus lorsque, par exemple, ceux-ci ont un contour très rond, presque circulaire.

L'objet de la présente invention est, dans un ensemble du type décrit dans le FR-A-2 629 604 (c'est-à-dire comprenant une monture + une paire de verres cerclés monobloc), de remédier aux inconvénients cités plus haut en proposant que le maintien de la paire de verres cerclés soit réalisé d'une autre manière.

À cet effet, essentiellement, on tire parti de la possibilité de déformation élastique de la tige centrale non seulement pour éviter que, par maladresse, l'utilisateur ne torde la paire de verres cerclés lorsque celle-ci est dissociée de la monture, mais aussi et surtout pour contribuer au montage et au maintien de cette paire de verres cerclés dans la monture.

Ce résultat est atteint, selon la présente invention, grâce aux caractéristiques énoncées dans la partie caractérisante de la revendication principale et, subsidiairement, par celles énoncées dans les sous-revendications.

D'autres caractéristiques et avantages apparaîtront à la lecture de la description détaillée ci-dessous, faite en référence aux dessins annexés.

La figure 1 est une vue de dessus de la paire de lunettes selon l'invention, constituée d'une monture et d'une paire de verres cerclés.

La figure 2 est une vue en plan de la monture, prise suivant II-II de la figure 1.

La figure 3 est une vue en plan de la paire de verres cerclés.

La figure 4 est une vue en coupe, suivant IV-IV de la figure 2, de la monture avec la paire de verres cerclés qu'elle doit recevoir, avant mise en place de celle-ci.

La figure 5 est homologue de la figure 4, avec la paire de verres cerclés positionnée dans la monture.

La figure 6 est homologue de la figure 5, après emboîtement final de la paire de verres cerclés dans la monture.

Les figures 7 à 9 sont des détails vus en coupe des figures 4 à 6, respectivement.

La figure 10 illustre schématiquement les déformations subies par la paire de verres cerclés.

Sur les figures, la référence 10 désigne, de façon générale, la monture qui sera utilisée pour constituer la paire de lunettes de la présente invention, en coopération avec une paire de verres cerclés emboîtables 20.

Les verres 20 sont montés sur des cercles 30 par l'opticien (le serrage étant assuré par exemple par un serre-cercle 32), et cette paire de verres cerclés pourra être ensuite mise en place sur la monture et retirée par l'utilisateur lui-même.

Le cercle 30 est constitué d'un cerclage qui viendra enchâsser le verre sur tout son pourtour. De préférence, ce cerclage présente un drageoir 37 (visible figures 7 à 9 en coupe) qui coopère avec un biseau 21 taillé à la périphérie du verre ; cette technique permet en particulier de donner une certaine épaisseur au cercle, ce qui facilitera sa coopération avec la gorge homologue de la monture.

Les deux cercles 30 sont réunis ensemble par une tige centrale élastique 36 présentant un effet de ressort, cette tige étant soudée aux deux cercles de manière que, après mise en place des verres, la paire de verres cerclés forme un ensemble monobloc indissociable et facile à manipuler.

Cet ensemble sera en outre déformable élastiquement en flexion par sollicitation de l'utilisateur, par exemple par appui des pouces sur la tige centrale (la flexion de l'ensemble résulte essentiellement de la flexion de la tige, du fait de la rigidification des cercles par les verres qu'ils enchâssent).

En ce qui concerne la monture 10, celle-ci comporte deux emplacements de verre 11 reliés ensemble par un nez 12, et elle est pourvue de deux branches 13, articulées de manière classique sur la partie frontale de la monture par des charnières. En variante, les branches 13 peuvent cependant être montées sur la paire de cercles 30 au lieu de l'être sur la monture 10, le reste de la structure étant inchangé par ailleurs.

Il est prévu autour de chaque emplacement de verre 11 une gorge périphérique 14 qui logera chaque verre cerclé de manière à faire pénétrer le cercle dans l'épaisseur de la monture, de préférence en le faisant pénétrer totalement pour des raisons esthétiques. Il est également prévu un évidement 18 pour le serre-cercle 32 et un évidement 19 formé dans la région du nez pour loger la tige 36.

De façon caractéristique de la présente invention, la gorge périphérique 14 présente dans la région temporale 14a (c'est-à-dire la région la plus éloignée de l'axe central Δ), un épaulement 14b, tandis que la région opposée 14c (région nasale, voisine de l'axe Δ) est au contraire dépourvue d'épaulement et présente une paroi sensiblement plane, comme on peut le voir sur les détails des figures 7 à 9.

Cette configuration va permettre d'utiliser le caractère élastique de la tige centrale 36 pour le positionnement et le maintien de paire de verres cerclés dans la monture.

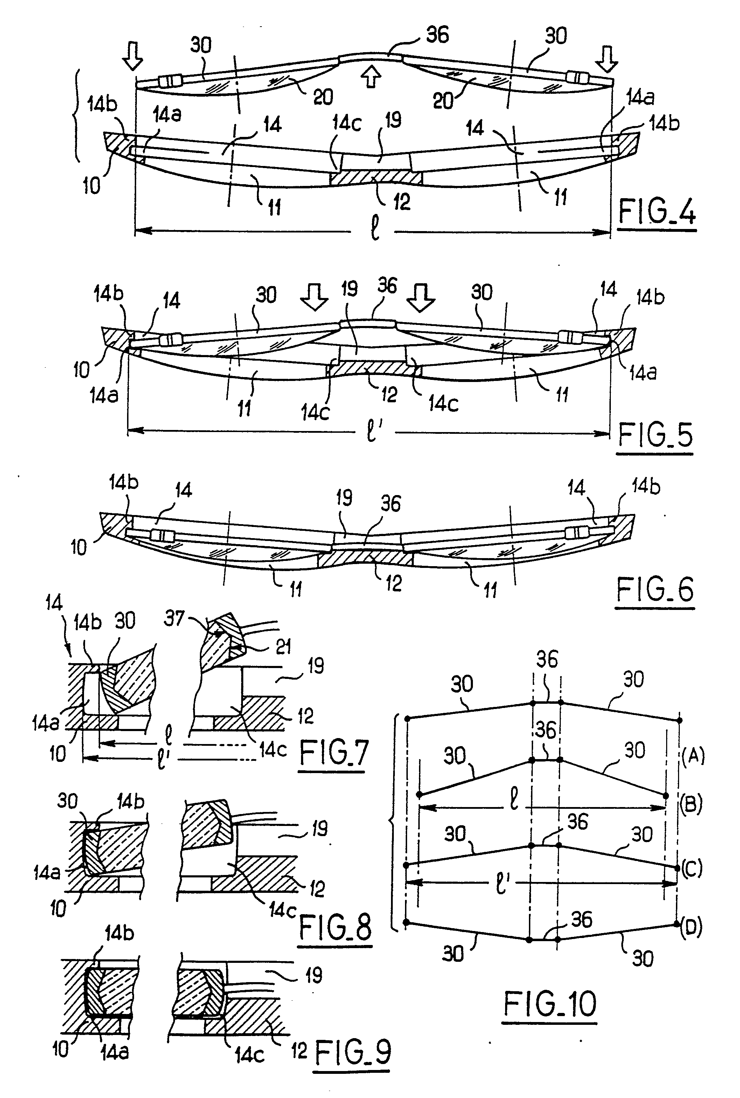

A cet effet, comme illustré figures 4 et 7, l'utilisateur présente d'abord au-dessus de la monture la paire de verres cerclés et déforme cette dernière (les sollicitations appliquées sont illustrées par des flèches) jusqu'à ce que sa longueur horstout $l$ vienne correspondre à la dimension séparant les deux épaulements opposés 14b, permettant ainsi d'insérer la paire de verres cerclés dans la gorge 14 de la monture.

La figure 10 illustre en (A), de façon schématique, la forme libre de la paire de verres cerclés lorsque celle-ci n'est soumise à aucune contrainte, et en (B) sa forme lorsque l'utilisateur la soumet à une flexion pour pouvoir l'introduire dans la gorge 14, sous l'épaulement 14b.

Lorsque l'utilisateur relâche la paire de verres cerclés, celle-ci prend la position illustrée figures 5 et 8, c'est-à-dire avec les cercles 30 venant en butée contre la face interne de la gorge dans la région 14a, sous l'épaulement 14b (position (C) de la figure 10).

Pour bloquer en place la paire de verres cerclés, l'utilisateur applique une sollicitation (flèches de la figure 5) sur la partie des verres proche de la tige 36, par exemple en appuyant avec ses pouces à cet endroit, ce qui fait passer la paire de verres cerclés à la position illustrée figures 6 et 9.

Dans cette dernière position, comme on peut le voir en (D) sur la figure 10, la paire de verres cerclés est légèrement fléchie, mais sa flèche est de sens opposé à la flèche qu'elle avait dans sa position libre (position (A) de la figure 10) ou dans la position des figures 5 et 8 (position (C) de la figure 10).

Ceci permet d'avoir un effet de flambage (le flambage étant la déformation subie par une pièce allongée comprimée en bout) qui assure un encliquetage parfait de la paire de verres cerclés en position dans la monture, du fait de l'impossibilité de passer de la position (D) à la position (C) sans une sollicitation relativement importante, ce qui évite la plupart des causes d'expulsion non intentionnelle de la paire de verres cerclés.

Pour cela, la dimension $l$ correspondant à la longueur hors-tout de la paire de verres cerclés en place dans son logement doit être inférieure à la longueur hors-tout de la paire de verres cerclés à l'état libre.

Cet effet de flambage, bien que particulièrement avantageux, n'est cependant pas indispensable à la mise en oeuvre de la présente invention. On pourrait prévoir aussi bien que la paire de verres cerclés ne soit pratiquement pas fléchie dans sa position finale, le maintien en place étant assuré essentiellement par les épaulements 14b avec, éventuellement, un léger frottement d'insertion des cercles dans la gorge 14.

Comme autre variante, on pourrait également inverser le rôle des régions 14a et 14c, la région pourvue de l'épaulement étant alors la région nasale et la région dépourvue d'épaulement étant la région temporale ; bien évidemment, dans ce cas la flexion de la paire de verres cerclés aurait lieu dans le sens inverse de celui illustré figure 4.

Egalement, bien que l'on ait illustré une paire de verres cerclés à laquelle on fait subir une flexion de part et d'autre de son plan moyen (le plan horizontal perpendiculaire au plan de la feuille, sur les figures 4 à 10), on pourrait également imaginer de solliciter la paire de verres cerclés avec une composante de flexion dans ce plan, dès lors que la tige centrale 36 permet une telle déformation (ce qui suppose une tige centrale 36 unique et de section sensiblement constante dans les deux directions de flexion).

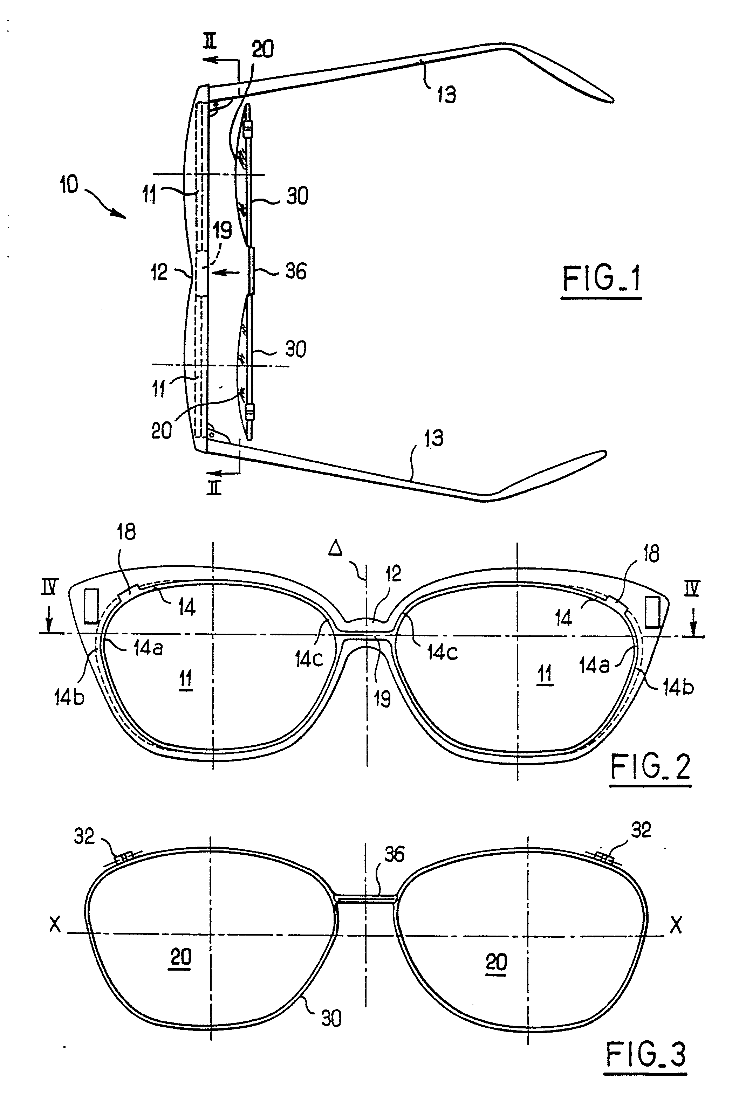

Enfin, il peut être avantageux de «ménisquer» la tige 36, c'est-à-dire de lui donner, vue de dessus, une forme non plus rectiligne comme sur la figure 1, mais légèrement convexe ; ceci permet d'une part de compenser les tolérances de fabrication éventuelles sur les montures et les paires de verres cerclés, et d'autre part d'aider à l'insertion de ces dernières dans les montures grâce à l'élasticité supplémentaire procurée par cette forme.

Comme on peut le constater, la mise en place de la paire de verres cerclés s'est faite sans qu'il soit nécessaire de déformer la monture, ce qui permet la plus grande liberté de choix des matériaux pour celle-ci. Il n'est cependant pas indispensable à la mise en oeuvre de l'invention que la monture soit rigide; on pourrait même envisager de combiner à la flexion de la paire de verres cerclés une déformation additionnelle de la monture, par exemple pour y encliqueter des bossages rapportés sur les cercles.

**Revendications**

1. Une paire de lunettes, comportant une monture (10) et une paire de verres (20) fixés à cette monture, dans laquelle:
- chacun des verres est enchâssé sur un cercle (30) qui lui est propre,
- la monture présente, sur sa face interne et autour de chaque emplacement (11) de verre, une gorge périphérique (14) logeant chaque verre cerclé de manière à faire pénétrer le cercle dans l'épaisseur de la monture,
caractérisée en ce que:
- les deux cercles sont réunis ensemble par une tige centrale (36) les maintenant avec un écartement prédéterminé l'un par rapport à l'autre, la monture comportant dans la région du nez (12) un évidement (19) logeant cette tige,
- la gorge périphérique (14) de la monture présente un épaulement (14b) seulement sur une région (14a) de chaque emplacement de verre, la région située en vis-à-vis (14c) étant essentiellement dépourvue d'un tel épaulement, et
- la paire de verres cerclés (30, 36) est élastiquement déformable en flexion entre:
• une première position (A), fortement fléchie, obtenue par sollicitation extérieure de l'utilisateur, permettant l'insertion de chacun des verres cerclés (30) sous l'épaulement homologue (14b) de la monture sans déformation notable de cette dernière, et
• une seconde position (D), faiblement ou non fléchie, obtenue après suppression de ladite sollicitation extérieure, permettant l'emboîtement de chacun des verres cerclés sous l'épaulement homologue de la monture et le maintien de ceux-ci en position dans la gorge de la monture.

2. La paire de lunettes de la revendication 1, dans laquelle, dans la seconde position, la paire de verres cerclés reste soumise à une compression en bout du fait de la venue en contact des verres cerclés avec la face interne de la gorge périphérique de la monture, cette compression en bout produisant un effet de flambage venant renforcer le maintien des verres cerclés en position dans la gorge de la monture à l'encontre de sollicitations extérieures non intentionnelles.

3. La paire de lunettes de l'une des revendications 1 ou 2, dans laquelle la région (14a) de l'emplacement de verre présentant un épaulement est la région temporale de celui-ci.

4. Une monture (10) permettant de constituer une paire de lunettes selon l'une des revendications 1 à 3, caractérisée en ce qu'elle présente sur sa face interne et autour de chaque emplacement de verre une gorge périphérique (14) présentant un épaulement (14b) seulement sur une région (14a) de chaque emplacement de verre, la région située en vis-à-vis (14c) étant essentiellement dépourvue d'un tel épaulement.

5. Une paire de verres cerclés permettant de constituer une paire de lunettes selon l'une des revendications 1 à 3, caractérisée en ce que les cercles (30) sont réunis ensemble par une tige centrale (36) et en ce qu'elle est élastiquement déformable en flexion entre:
• une première position (A), fortement fléchie, obtenue par sollicitation extérieure de l'utilisateur, permettant l'insertion de chacun des verres cerclés (30) sous l'épaulement homologue (14b) de la monture sans déformation notable de cette dernière, et
• une seconde position (D), faiblement ou non fléchie, obtenue après suppression de ladite sollicitation extérieure, permettant l'emboîtement de chacun des verres cerclés sous l'épaulement homologue de la monture et le maintien de ceux-ci en position dans la gorge de la monture.

FIG_1

FIG_2

FIG_3

FIG_4

FIG_5

FIG_6

FIG_7

FIG_8

FIG_9

FIG_10

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| P,D<br>Y | FR-A-2 629 604 (F. TOFFIN)<br>* Revendications *<br>--- | 1 | G 02 C 1/06 |
| D,Y | US-A-2 586 546 (R.H. LONGENECKER)<br>* Page 1 *<br>--- | 1,2 | |
| Y | FR-A-1 148 644 (COTTET, POICHET, TAGNON)<br>* Page 2: paragraphe 4; résumé *<br>--- | 1 | |
| D,A | FR-A-1 566 709 (S.I.P.I.R.S.)<br>* Page 1 *<br>--- | 1 | |
| A | US-A-3 021 753 (R.C. VINSON)<br>--- | | |
| A | US-A-2 748 654 (J.J. ROHRBACH)<br>----- | | |

| DOMAINES TECHNIQUES RECHERCHES (Int. Cl.5) |
|---|
| G 02 C 1/06 |

Le présent rapport a été établi pour toutes les revendications

| Lieu de la recherche | Date d'achèvement de la recherche | Examinateur |
|---|---|---|
| LA HAYE | 01-06-1990 | CALLEWAERT-HAEZEBROUCK H |

EPO FORM 1503 03.82 (P0402)